# EUROPEAN PATENT APPLICATION

(11) **EP 2 698 746 A2**
(43) Date of publication of application: **19.02.2014**
(21) Application number: 13173713.2
(22) Date of filing: 26.06.2013
(51) Int. Cl.: G06K 19/073, H04L 29/06, H04W 12/02, G06F 21/86, H01L 23/00

(54) **Method and system for secure configuration of an electronic device via an RFID IC**

(30) Priority: 13.08.2012 US 201213584210
(71) Applicant: NXP B.V., 5656 AG Eindhoven (NL)
(72) Inventor: Haselsteiner, Ernst, 5656 AG Eindhoven (NL); Moderegger, Erik, 5656 AG Eindhoven (NL); Stromberger, Guenter, 5656 AG Eindhoven (NL)
(74) Representative: Krott, Michel

(57) **Abstract**

Embodiments of an electronic device are disclosed. In one embodiment, the electronic device includes a circuit board, a central processing unit (110), an RFID IC (112), and a physically secure communications channel (116). The circuit board includes a radio frequency antenna (114), the CPU is connected to the circuit board and includes a CPU-to-RF identification (RFID) interface (130) that does not support a digital security measure which requires asymmetric key cryptography, the CPU being enclosed within a package. The RFID IC is connected to the RF antenna and has an RFID-to-CPU interface that does not support a digital security measure which requires asymmetric key cryptography. The RFID IC also has non-volatile memory that stores configuration data for configuring the electronic device. The physically secure communications channel connects the CPU-to-RFID interface to the RFID-to-CPU interface and the physically secure communication channel is protected from physical access by a structural barrier.

## Description

Consumer products are increasingly including integrated circuits (ICs) with advanced processing capabilities, such as central processing units (CPUs) and microcontrollers to accommodate different uses and price points. IC devices are being produced to support multiple different configuration options. Different configuration options allow an IC device to be configured after the IC device is installed into an electronic device. In order to make the configuration process more consumer friendly, electronic devices can be equipped with a radio frequency identification (RFID) IC to support contactless configuration of a consumer device. For example, a device such as a tablet computer can be contactlessly configured at a point of sale without removing the tablet computer from its original packaging.

Although the ability to perform contactless configuration provides a high level of convenience, it may be possible to fraudulently use configuration information to, for example, upgrade an electronic device without proper authorization. One technique used to combat fraudulent configuration attempts involves providing secure communication endpoints between the CPU and the RFID IC, i.e., endpoints that implement digital security measures to ensure secure communication of configuration information. For example, the digital security measures may utilize asymmetric key cryptography to ensure data integrity. Although digital security measures can ensure secure communication between the CPU and the RFID IC and make it difficult to fraudulently configure an electronic device, equipping CPUs and RFID ICs with digital security capability can be expensive in terms of, for example, product cost and IC real estate.

Embodiments of an electronic device are disclosed. In one embodiment, the electronic device includes a circuit board, a radio frequency (RF) antenna; a central processing unit (CPU), an RFID IC, and a physically secure communications channel. The CPU is connected to the circuit board and includes a CPU-to-RFID interface that does not support a digital security measure which requires asymmetric key cryptography. The CPU is enclosed within a package and the RFID IC is connected to the RF antenna and has an RFID-to-CPU interface that does not support a digital security measure which requires asymmetric key cryptography. The RFID IC also has non-volatile memory that stores configuration data for configuring the electronic device. The physically secure communications channel connects the CPU-to-RFID interface to the RFID-to-CPU interface and the physically secure communication channel is protected from physical access by a structural barrier.

A method for changing the configuration of an electronic device is also disclosed. In one embodiment, the electronic device includes a CPU and an RFID IC and the RFID IC stores a unique identifier (ID) for the electronic device and configuration information for configuring the electronic device. In one embodiment, the method involves establishing an RF connection to a configuration system, receiving new configuration data from the configuration system via the RF connection, storing the new configuration data in the RFID IC, starting up the CPU of the electronic device, and communicating the new configuration data from the RFID IC to the CPU via a physically secure communications channel, wherein the physically secure communications channel is protected from physical access by a structural barrier and wherein the new configuration data is communicated across the physically secure communications channel without encryption.

An electronic device is also disclosed. In one embodiment, the electronic device includes a circuit board, an RF antenna, and a CPU connected to the circuit board, wherein the CPU includes a CPU-to-RFID interface and the CPU is enclosed within a package. The electronic device also includes an RFID IC connected to the RF antenna. The RFID IC has an RFID-to-CPU interface and non-volatile memory that stores a unique identifier (ID) for the electronic device, configuration data for configuring the electronic device, and a signature that is generated from the unique ID and the configuration data. The electronic device also includes a physically secure communications channel that connects the CPU-to-RFID interface to the RFID-to-CPU interface, wherein the physically secure communication channel is protected from physical access by a structural barrier.

Other aspects in accordance with an embodiment of the invention will become apparent from the following detailed description, taken in conjunction with the accompanying drawings, illustrated by way of example of the principles of the invention.
Fig. 1 depicts a system that includes an electronic device and a configuration system having a contactless reader and a configuration management unit.
Fig. 2 is a process flow diagram of a startup operation of the electronic device of Fig. 1.
Fig. 3 is a process flow diagram of a process for changing the configuration data of the electronic device of Fig. 1.
Fig. 4 depicts a side cutaway view of internal electronic components of the electronic device of Fig. 1.
Fig. 5 depicts a side cutaway view of another embodiment of internal electronic components of the electronic device of Fig. 1.
Fig. 6 depicts a side cutaway view of another embodiment of internal electronic components of the electronic device of Fig. 1.
Fig. 7 depicts a side cutaway view of another embodiment of internal electronic components of the electronic device of Fig. 1.
Fig. 8 depicts a side cutaway view of another embodiment of internal electronic components of the electronic device of Fig. 1.

Throughout the description, similar reference numbers may be used to identify similar elements.

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

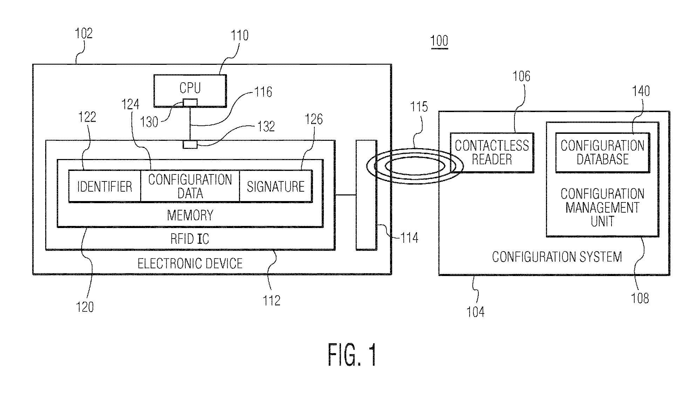

Fig. 1 depicts a system 100 that includes an electronic device 102 and a configuration system 104 having a contactless reader 106 and a configuration management unit 108. The system enables the configuration of the electronic device to be securely updated while making it more difficult to fraudulently change the device configuration.

The electronic device 102 includes a CPU 110, an RFID IC 112, an antenna 114, and a communications channel 116. The electronic device can be any type of electronic device including, for example, consumer electronic devices and commercial electronic devices, e.g., televisions, desktop computers, laptop computers, tablet computers, PDAs, smartphones, set-top boxes, and digital cameras.

The CPU 110 is an IC that provides microinstruction, data, and/or signal processing capability for the electronic device 102. The CPU may include a multifunction processor and/or an application-specific processor. Examples of CPUs include the PowerPC™ family of processors by IBM, the x86 family of processors by Intel, the Ax family of processors from Apple.

The RFID IC 112 and antenna 114 are configured to support RF contactless communication between the electronic device 102 and the configuration system 104. RFID ICs and corresponding antennas are well known and not described in further detail below. The RFID IC includes a non-volatile memory 120, such as, for example, EEPROM, Flash, and/or one-time programmable memory. In the embodiment of Fig. 1, the memory stores an identifier (ID) 122, configuration data 124, and a signature 126, all of which are described in more detail below.

In an embodiment, the identifier 122 is a set of bits that is uniquely associated with the electronic device 102. For example, the set of bits represents a unique identifier that is specific to only one particular electronic device. In an embodiment, the unique identifier and the corresponding field in the memory 120 must be large enough to support the universe of electronic devices that is contemplated. In an embodiment, the identifier is stored in such a way that it cannot be changed. For example, the identifier is stored in a portion of the memory that has one-time programmable memory. In an embodiment, the identifier is not protected against reading but only against writing.

The configuration data 124 stored in the memory 120 is a set of bits that is used by the electronic device 102 to configure certain features of the electronic device. For example, the set of bits represents configuration instructions for the CPU to execute. The features to be configured could be features of the CPU itself, e.g., a clock frequency, cache size, etc., or features of other components of the electronic device such as a graphics accelerator IC, a memory device (e.g., a hard disk or Flash memory). Other features that can be configured may include software-based features, such as, for example, how many different profiles can be stored, how many different programs can be managed, can the device connect to the Internet, the size of available memory, picture quality optimizations for televisions, image processing features of a digital camera. Although some configurable features are identified as examples, the number and type of configurable features is not limited to those identified herein. In an embodiment, the configuration data 124 can be freely read from the memory and/or written to the memory, e.g., the configuration data is not confidential and could be read by a compatible contactless reader.

The signature 126 is a set of bits that is generated from the identifier 122 and the configuration data 124. For example, the signature is generated by hashing over the identifier and the configuration data and then signing the hashing value with a private key, e.g., a 1280 bit RSA key. The signature can be freely read from the memory and/or written to the memory. In an embodiment, the initial signature is generated by the configuration system 104 when the configuration data is first set and provided to the electronic device. As is described below, the signature is used to prove that the stored configuration data represents a valid configuration for the electronic device with the specific identifier.

The communications channel 116 provides a signal communication pathway between the CPU 110 and the RFID IC 112. In an embodiment, the communications channel includes parallel conductive traces that electrically connect an interface of the CPU to an interface of the RFID IC. For example, the communications channel may utilize the Inter-Integrated Circuit (I2C) bus and corresponding protocols and the CPU and RFID IC interfaces are I2C compatible. The communications channel is connected to a "CPU-to-RFID" interface 130 at the CPU and to an "RFID-to-CPU" interface 132 at the RFID IC. The interfaces may include external connection points, e.g., conductive pads, and internal hardware, software, and/or firmware. In an embodiment the CPU-to-RFID interface and the RFID-to-CPU interface do not support digital security measures which require asymmetric key cryptography. As used herein, digital security measures which require asymmetric key cryptography refers to a cryptographic system that requires two separate keys, one of which is secret and one which is public, as is known in the field of digital cryptographic systems. Two well known uses of asymmetric key cryptography are public key encryption and digital signatures. Examples of asymmetric key cryptographic algorithms include RSA and Elliptic curve cryptography (ECC). In an embodiment in accordance with the invention, the CPU-to-RFID interface and the RFID-to-CPU interface are not equipped to perform public key encryption or implement a digital signature. Because the CPU-to-RFID interface and the RFID-to-CPU interface are not configured to support digital security measures which require asymmetric key cryptography, the cost of the interfaces and the electronic device as a whole can be less than a comparable device that is configured to support digital security measures which require asymmetric key cryptography. However, lack of digital security measures which require asymmetric key cryptography can make it easy to tap into the communications channel and insert fraudulent communications. Although in some embodiments the interfaces do not support digital security measures which require asymmetric key cryptography, there may be embodiments in which the interfaces support some form of low level digital security measures such as some basic encryption/decryption and some basic integrity protection such as parity bits or CRC.

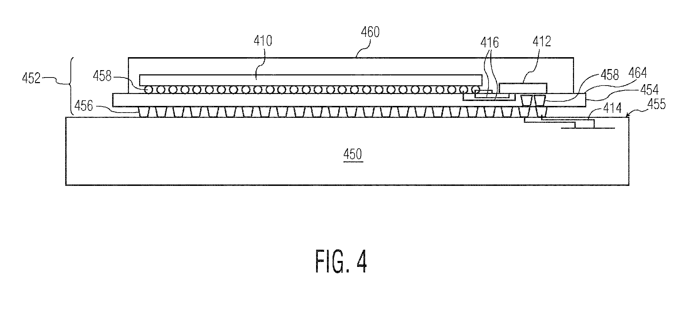

In an embodiment in accordance with the invention, the communications channel 116 between the CPU 110 and the RFID IC 112 is physically secure such that the communications channel is protected from physical access by a structural barrier. Accordingly, the lack of digital security measures in the electronic device is compensated for by physical security measures in the form of a structural barrier. The structural barrier protects the communications channel from access by a person attempting to tap into the communications channel to, for example, fraudulently configure the electronic device 102. In some cases, the protection is such that the communications channel cannot be accessed without physically dismantling and/or physically destroying the electronic device. Ultimately, it is desirable that the physical barrier provides enough of a deterrent that fraudulent configuration changes are prevented. Embodiments of the physically secure communications channel are described below with reference to Figs. 4 - 8.

Referring to the configuration system 104 of Fig. 1, the contactless reader 106 supports contactless RF communications between the configuration system and the electronic device 102. In an embodiment, contactless communications rely on inductive coupling between the electronic device and the configuration system. In an embodiment, contactless communications are accomplished according to the Near Field Communications (NFC) standards, which cover communications protocols and data exchange formats and are based on RFID standards including ISO/IEC 14443. The NFC standards include ISO/IEC 18092 and others identified by the NFC Forum. NFC supports communication between devices in the range of less than about 0.2 m and typically in the range of a few centimeters. Using a relatively short-range contactless communication protocol helps to limit the accessibility of the data, e.g., the identifier 122, the configuration data 124, and the signature 126, which is stored in the RFID IC.

The configuration management unit 108 manages the distribution of configuration information to electronic devices such as the electronic device 102 of Fig. 1. In an embodiment, the configuration management unit is maintained by an entity such as a retailer that controls access to configuration data that can be used to change (e.g., upgrade/downgrade) the current configuration of an electronic device. In the embodiment of Fig. 1, the configuration management unit includes a configuration database 140 that stores different sets of configuration data that can be provided to electronic devices via the contactless reader 106. The configuration management unit can be, for example, local to the contactless reader or remote from the contactless reader and connected to the reader via a network connection.

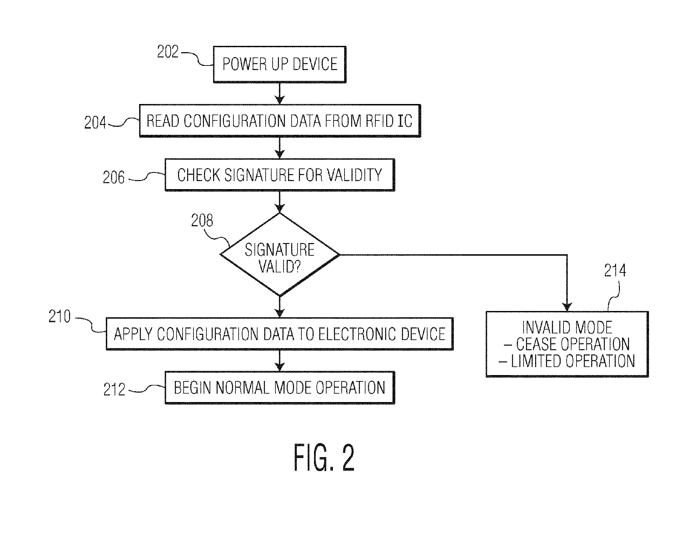

In order to understand the process of changing an existing configuration of the electronic device 102 of Fig. 1, it is helpful to understand how the electronic device uses the existing configuration data upon startup. A startup operation of the electronic device of Fig. 1 is now described with reference to Fig. 2. At block 202, the electronic device is powered up. At block 204 the configuration data and signature stored in the memory of the RFID IC are accessed and read by the CPU. At block 206 the signature is checked to see if the signature is valid. For example, validity of the signature is checked using the stored public key (e.g., public RSA key) as is known in the field of asymmetric key cryptography. In an embodiment, the signature is checked using a public key that is stored in the electronic device. The public key is not secret, but is stored in the electronic device in such a way that it cannot be modified by an unauthorized party. For example, the public key is stored in a one-time programmable read only memory within the CPU of the electronic device such that the public key cannot be changed. At decision block 208, if it is determined that the signature is valid, then at block 210, the configuration data is applied to the electronic device by the CPU and at block 212, normal operation of the electronic device begins. If it is determined that the signature is not valid, then at block 214, the electronic device is put into invalid mode. In invalid mode, the electronic device may, for example, cease to operate or may operate in some limited manner.

The above described operation is triggered upon power up of the electronic device. In other embodiments, a similar operation is performed periodically or upon an event other than power up. For example, a periodic configuration check may be implemented in electronic devices such as computer servers, which are infrequently powered off.

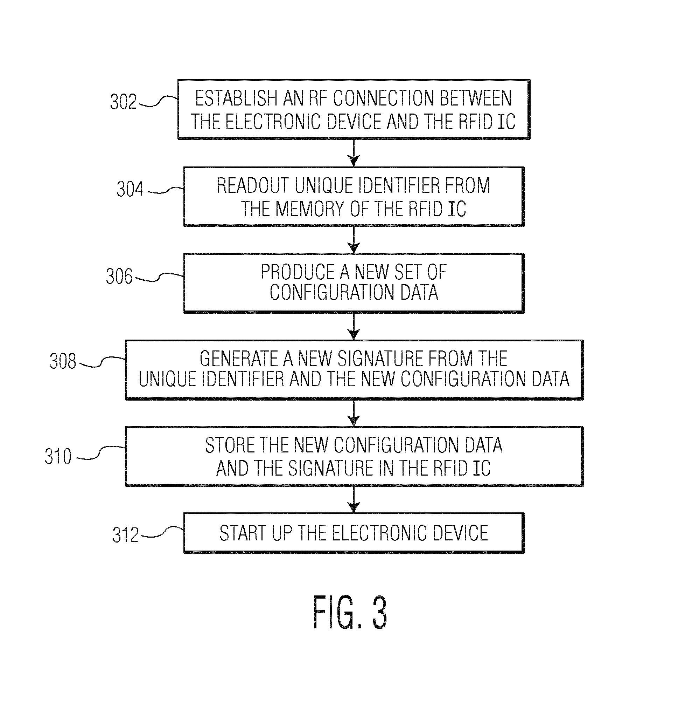

As described above, it may be desirable at times to change the configuration data stored in an electronic device in order to unlock and/or upgrade a certain feature or features of the electronic device. An example of a process for changing the configuration data of the electronic device 102 of Fig. 1 is now described with reference to Fig. 3. At block 302, an RF connection 115 (Fig. 1) is established between the RFID IC 112 and antenna 114 of the electronic device 102 and the contactless reader 106 of the configuration system 104. For example, an NFC communications channel is established between the RFID IC and the contactless reader. At block 304, the unique identifier of the electronic device is read from the memory 120 of the RFID IC by the configuration system and at block 306, the configuration system produces a new set of configuration data for the electronic device. In an embodiment, at least a portion of the configuration data is obtained from the configuration database. At block 308, the configuration system generates a new signature from the unique identifier and the new configuration data. For example, the new signature is generated by hashing the unique identifier and the new configuration data and then signing the hash value with the private key, e.g., the same private key that was used to generate the initial signature. At block 310, the new configuration data and the new signature are transmitted from the contactless reader to the RFID IC and stored in the memory of the RFID IC. With the new configuration data and the signature stored in the memory of the RFID IC, the electronic device is ready to be configured according to the new configuration data. For example, the new configuration is installed at device start up (block 312) as described with reference to Fig. 2.

In an embodiment, the new signature is used to ensure that only authorized parties are able to change the configuration of the electronic device 102. For example, an authorized dealer might initiate a configuration change after a consumer has paid for a configuration upgrade. In another embodiment, an end user may change the configuration at home by obtaining authorization via an Internet transaction. Creation of the signature is linked to knowledge of the private key, and therefore, the private key must be known to create a valid signature.

As described above, the communications channel 116 between the CPU 110 and the RFID IC 112 is physically secure such that the communications channel is protected from physical access by a physical barrier. In addition to providing a physically secure communications channel, in some embodiments, the RFID IC is also physically surrounded by a structural barrier such that the RFID IC cannot be easily removed from the electronic device 102 and/or replaced by a device that contains unauthorized or cloned data including, for example, an unauthorized or cloned triplet of identifier, configuration data, and valid signature.

Various embodiments of an arrangement of the CPU 110, the RFID IC 112, the antenna 114, and the physically secure communications channel 116 of the electronic device 102 of Fig. 1 are now described with reference to Figs. 4 - 8. Electronic devices, such as the electronic device depicted in Fig. 1, typically include at least one circuit board upon which one or more ICs are mounted. The circuit board, also referred to as a printed circuit board (PCB) or a motherboard, includes conductive traces to communicate electronic signals between different components of the electronic device.

Fig. 4 depicts a side cutaway view of internal electronic components of the electronic device 102 of Fig. 1. The electronic components include a circuit board 450, an RFID antenna 414, and a packaged IC 452. In the embodiment of Fig. 4, the RFID antenna is integrated into the circuit board, with contact points of the RFID antenna being exposed at top major surface 455 of the circuit board. For example, the majority of the antenna is completely embedded within the circuit board and contact points of the RFID antenna are exposed at the top major surface 455 of the circuit board.

The packaged IC 452 of Fig. 4 includes a CPU 410, an RFID IC 412, a substrate 454, external contact pads 456, internal contact pads 458, and a physically secure communications channel 416 between the CPU and the RFID IC. In an embodiment, the substrate is a known packaging substrate such as a plastic molded substrate or a ceramic substrate, although other materials may be used. The substrate includes conductive paths (not shown) that connect the internal contact pads to the external contact pads to electrically connect the CPU and the RFID IC with the circuit board as is known in the field. Some of the internal contact pads of the packaged IC are physically attached to contact pads of the CPU-to-RFID interface 130 (not shown) and the external contact pads of the packaged IC are physically attached to contact pads of the circuit board (not shown) by, for example, solder or conductive adhesive. Additionally, the RFID-to-CPU interface 132 (not shown) of the RFID IC is electrically connected to the communications channel and physically secured to the substrate via, for example, solder or conductive adhesive. The RFID IC is also electrically connected to the RFID antenna 414 via conductive elements that may include the external contact pads and conductive components 459 embedded within the substrate. In the embodiment of Fig. 4, the CPU and the RFID IC are attached to the substrate directly above the exposed contact points of the communications channel.

As shown in Fig. 4, the CPU 410 and the RFID IC 412 are enclosed within an encapsulant 460 such that the CPU and the RFID IC are not accessible from outside the packaged IC 452. The encapsulant may be a plastic or ceramic encapsulant as is known in the field of IC packaging. Other encapsulant materials and/or configurations are possible. For example, in some embodiments, the CPU and RFID IC are enclosed within a ceramic encapsulant that is fixed to the substrate with adhesive. In other embodiments, the CPU and/or RFID IC may be partially or fully accessible from outside packaged IC. All of the components used to package the CPU and the RFID IC can be collectively referred to as the IC package or simply as the package.

As described above, the communications channel 416 between the CPU 410 and the RFID IC 412 is physically secure such that the communications channel is protected from physical access by a structural barrier. In the embodiment of Fig. 4, the communications channel includes conductive traces (as indicated by 416) that are embedded within the substrate 454 of the packaged IC 452. For example, the conductive traces are embedded within the substrate during a plastic molding operation. The conductive traces may include, for example, copper wires, aluminum wires, or conductive glue. In the embodiment of Fig. 4, endpoints of the conductive traces are exposed at a top major surface 464 of the substrate at the locations of the RFID IC and the CPU. That is, the endpoints are accessible from the top major surface of the substrate, although the endpoints are ultimately covered by other components, e.g., the CPU 410 and the RFID IC 412. Between the exposed endpoints, the conductive traces are embedded within the substrate, which provides a structural barrier, such that the conductive traces cannot be readily accessed by, for example, an intruder that is intending to fraudulently change the configuration of the electronic device. The communications channel may also include other conductive elements such as the external conductive pads 456, the internal conductive pads 458, and other conductive traces within the substrate 454.

In the embodiment of Fig. 4, the physical protection of the communications channel 416 is at least a three-fold. First, access to the communications channel is protected by the encapsulant 460 of the packaged IC. Second, access to the communications channel is protected by the locations of the CPU 410 and the RFID IC 412 directly above the exposed endpoints of the communications channel. Third, access to the communications channel between the endpoints is protected by the fact that the conductive traces of the communications channel are embedded within the substrate. Given the configuration of Fig. 4, an intruder intending to fraudulently configure the electronic device 102 by gaining access to the communications channel would likely have to remove the encapsulate of the packaged IC and then either remove the RFID IC from the substrate, remove the CPU from the substrate, or penetrate the substrate to access the embedded conductive traces of the communications channel. Such structural barriers to physical access can deter attempts to fraudulently configure the electronic device. Further, penetrating the structural barriers to gain access to the communications channel may ultimately damage the electronic device and render the electronic device unusable for its intended purpose, thereby providing a further deterrent to fraudulent configuration.

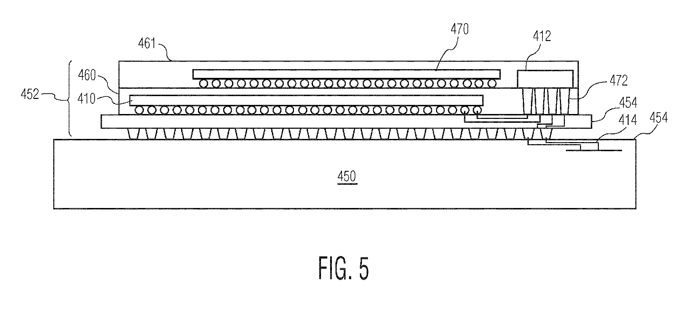

Fig. 5 depicts a side cutaway view of another embodiment of internal electronic components of the electronic device 102 of Fig. 1. The embodiment of Fig. 5 is similar to the embodiment of Fig. 4, with the embodiment of Fig. 5 including a "package-on-package" configuration in which an additional IC 470, such as a memory IC, is packaged on top of the CPU 410. The electronic components of the embodiment of Fig. 5 include a circuit board 450, an RFID antenna 414, and a packaged IC 452, with the packaged IC including the CPU, the memory IC, and the RFID IC 412.

In the embodiment of Fig. 5, the memory IC 470 and the RFID IC 412 are packaged above the CPU 410 in a second level package that includes internal contact pads. As shown in Fig. 5, the physically secure communications channel 416 is still embedded in the substrate 454 of the packaged IC and electrically connects the CPU to the RFID IC. The RFID IC is electrically connected to the RFID antenna and the communications channel via conductive elements that traverse the CPU package, including conductive elements 472 that electrically connect the RFID antenna to the RFID IC and conductive elements that electrically connect the RFIC IC to the communications channel. In the embodiment of Fig. 5, the RFID IC is attached to a second level packaging surface through which the conductive elements protrude. The conductive elements may include, for example, copper wires, aluminum wires, or conductive glue.

As shown in Fig. 5, the CPU 410, the memory IC 470, and the RFID IC 412 are enclosed within first and second level encapsulants 460 and 461, respectively, such that the CPU and the RFID IC are not accessible from outside the packaged IC. The encapsulant may be a plastic or ceramic encapsulant as is known in the field of IC packaging. Other encapsulant materials and/or configurations are possible. For example, in some embodiments, the CPU, the memory IC, and the RFID IC are enclosed within a ceramic encapsulant that is fixed to the substrate with adhesive. In other embodiments, the CPU, the memory IC, and/or the RFID IC may be partially or fully accessible from outside packaged IC.

As described above with reference to Fig. 4, the communications channel 416 between the CPU 410 and the RFID IC 412 is physically secure such that the communications channel is protected from physical access by a structural barrier. In the embodiment of Fig. 5, the structural barrier includes the first and second level packaging and the substrate 454, within which the communications channel is embedded.

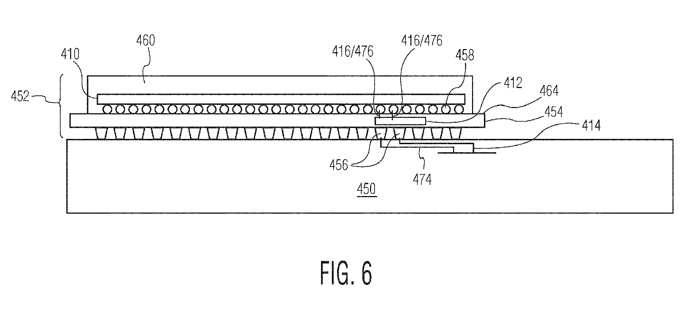

Fig. 6 depicts a side cutaway view of another embodiment of internal electronic components of the electronic device 102 of Fig. 1. The embodiment of Fig. 6 is similar to the embodiment of Fig. 4, with the embodiment of Fig. 6 having the RFID IC 412 embedded within the substrate 454 of the packaged IC 452 instead of mounted on the top major surface 464 of the substrate. In the embodiment of Fig. 6, the RFID IC is electrically connected to the RFID antenna 414 via external conductive pads 456 and conductive traces 474 and electrically connected to the CPU 410 via conductive traces 476 and internal conductive pads 458. In the embodiment of Fig. 6, the CPU is attached to the substrate directly above the endpoints of the conductive traces of the communications channel.

In the embodiment of Fig. 6, the communications channel 416/476 between the CPU 410 and the RFID IC 412 is physically secure such that the communications channel is protected from physical access by a structural barrier. In the embodiment of Fig. 6, the physical protection of the communications channel is at least a three-fold. First, access to the communications channel is protected by the encapsulant of the packaged IC. Second, access to the communications channel is protected by the location of the CPU directly above the endpoints of the communications channel. Third, access to the communications channel between the endpoints is protected by the fact that the conductive traces of the communications channel are embedded within the substrate. Given the configuration of Fig. 6, an intruder intending to fraudulently configure the electronic device by gaining access to the communications channel would likely have to remove the encapsulant of the packaged IC and then remove the CPU from the substrate. Such structural barriers to physical access can deter attempts to fraudulently configure the electronic device. Further, removing the encapsulant and the CPU of the packaged IC to gain access to the communications channel may ultimately damage the electronic device and render the electronic device unusable for its intended purpose, thereby providing a further deterrent to fraudulent configuration.

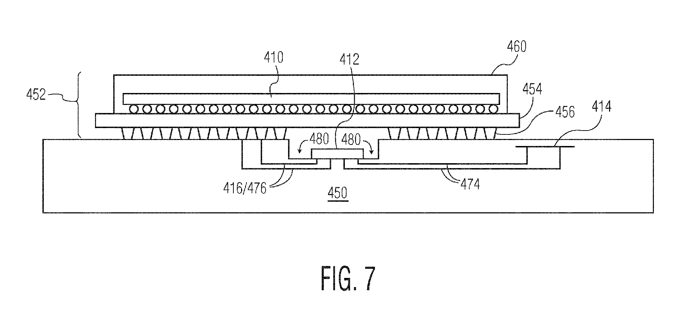

Fig. 7 depicts a side cutaway view of another embodiment of internal electronic components of the electronic device 102 of Fig. 1. The embodiment of Fig. 7 is similar to the embodiment of Fig. 6, with the embodiment of Fig. 7 having the RFID IC 412 located within a cavity of the circuit board 450 instead of embedded within the substrate 454 of the packaged IC 452. In the embodiment of Fig. 7, the circuit board has a cavity 480 with an elevation that is below the elevation of the top major surface 455 of the circuit board 450. The RFID IC is attached within the cavity directly below the packaged IC. As depicted in Fig. 7, the RFID IC is electrically connected to the RFID antenna via conductive traces 474 that are embedded within the circuit board and the RFID IC is electrically connected to the external conductive pads 456 of the packaged IC by conductive traces 476 that are embedded within the circuit board. In the embodiment of Fig. 7, the packaged IC is attached to the circuit board directly above the contact points of the conductive traces of the communications channel and directly above the RFID IC such that it is difficult if not impossible to physically access the RFID IC without removing the CPU from the circuit board. For example, the packaged IC may be attached to the circuit board by soldering all of the external contact pads 456 to the circuit board, creating a barrier of soldered contact pads between the RFID IC and the surrounding environment. Given the configuration of Fig. 7, the communications channel between the CPU and the RFID IC is physically secure such that the communications channel is protected from physical access by a structural barrier. In the embodiment of Fig. 7, the physical protection of the communications channel is at least a three-fold. First, access to the RFID IC is protected because the packaged IC is attached to the circuit board directly above the RFID IC. Second, access to the communications channel between the endpoints at the top surface of the circuit board and the RFID IC is protected by the fact that the conductive traces of the communications channel are embedded within the circuit board. Given the configuration of Fig. 7, an intruder intending to fraudulently configure the electronic device by gaining access to the communications channel would likely have to remove the packaged IC from the circuit board, which may ultimately damage the electronic device and render the electronic device unusable for its intended purpose, thereby providing a deterrent to fraudulent configuration.

In other embodiments, a cavity may be formed by a connection structure that is part of, or attached to, the circuit board. For example, a rectangular connection structure is configured to receive the RFID IC in a central recessed location, with the packaged IC affixed on top of the connection structure and directly above the RFID IC.

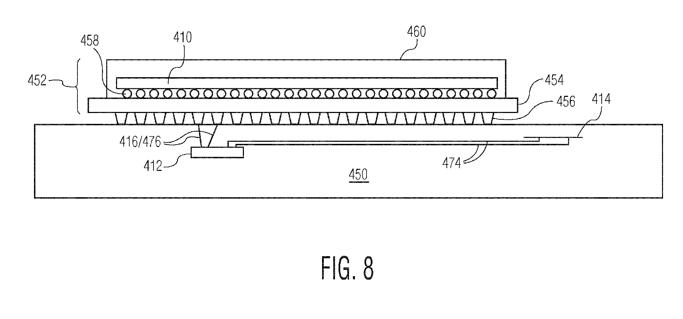

Fig. 8 depicts a side cutaway view of another embodiment of internal electronic components of the electronic device 102 of Fig. 1. The embodiment of Fig. 8 is similar to the embodiment of Fig. 6, with the embodiment of Fig. 8 having the RFID IC 412 embedded within the circuit board 450 instead of embedded within the substrate 454 of the packaged IC 452. In the embodiment of Fig. 8, the RFID IC is electrically connected to the RFID antenna 414 via conductive traces 474 that are embedded within the circuit board and the RFID IC is electrically connected to the external conductive pads 456 of the packaged IC by conductive traces 476 that are embedded within the circuit board. The packaged IC is attached to the circuit board directly above the contact points of the conductive traces of the communications channel.

In the embodiment of Fig. 8, the communications channel 416 between the CPU 410 and the RFID IC 412 is physically secure such that the communications channel is protected from physical access by a structural barrier and the physical protection of the communications channel is at least a three-fold. First, access to the RFID IC is protected because the RFID IC is embedded within the circuit board. Second, access to the communications channel is protected by the location of the packaged IC directly above the endpoints of the communications channel. Third, access to the communications channel between the endpoints is protected by the fact that the conductive traces of the communications channel are embedded within the circuit board. Given the configuration of Fig. 8, an intruder intending to fraudulently configure the electronic device by gaining access to the communications channel would have to remove the packaged IC from the circuit board, which may ultimately damage the electronic device and render the electronic device unusable for its intended purpose, thereby providing a deterrent to fraudulent configuration.

In the above description, specific details of various embodiments are provided. However, some embodiments may be practiced with less than all of these specific details. In other instances, certain methods, procedures, components, structures, and/or functions are described in no more detail than to enable the various embodiments of the invention, for the sake of brevity and clarity.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid state memory, magnetic tape, a removable computer diskette, a random access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. An electronic device comprising:
- a circuit board;
- a radio frequency (RF) antenna;
- a central processing unit (CPU) connected to the circuit board, wherein the CPU includes a CPU-to-RF identification (RFID) interface that does not support a digital security measure which requires asymmetric key cryptography, the CPU being enclosed within a package;
- an RFID integrated circuit (IC) connected to the RF antenna and having an RFID-to-CPU interface that does not support a digital security measure which requires asymmetric key cryptography, the RFID IC having non-volatile memory that stores configuration data for configuring the electronic device;
- a physically secure communications channel that connects the CPU-to-RFID interface to the RFID-to-CPU interface, wherein the physically secure communication channel is protected from physical access by a structural barrier.

2. The electronic device of claim 1 wherein the structural barrier comprises an encapsulant of the package.

3. The electronic device of claim 2 wherein the CPU and the RFID IC are enclosed within the same encapsulant.

4. The electronic device of claim 1 wherein the RFID IC is embedded within a substrate of the package.

5. The electronic device of claim 1 wherein the RFID IC is embedded within the circuit board.

6. The electronic device of claim 1 wherein the CPU and the RFID IC are enclosed within a common IC package such that the structural barrier comprises the common IC package.

7. The electronic device of claim 1 wherein at least a portion of the physically secure communications channel is embedded within a substrate of the package.

8. The electronic device of claim 1 wherein the RFID IC is attached directly to the circuit board and wherein the CPU is attached to the circuit board directly over the RFIC IC.

9. The electronic device of claim 8 wherein the CPU is attached such that the RFID IC is not physically accessible without removing the CPU from the circuit board.

10. The electronic device of claim 1 wherein the RFID IC is attached directly to the circuit board within a cavity of the circuit board and wherein the CPU is attached to the circuit board directly over the RFIC IC.

11. The electronic device of claim 10 wherein the CPU is attached such that the RFID IC is not physically accessible without removing the CPU from the circuit board.

12. The electronic device of claim 1 wherein a unique identifier (ID) for the electronic device and a signature are stored in the memory of the RFID IC, the signature being generated from the unique ID and the configuration data.
